# EUROPÄISCHE PATENTANMELDUNG

(11) **EP 1 352 817 A1**
(43) Veröffentlichungstag der Anmeldung: **15.10.2003**
(21) Anmeldenummer: 03010681.9
(22) Anmeldetag: 13.05.2003
(51) Int. Cl.: B62D 65/00

(54) **Transporteinrichtung und Verfahren zum Transport von Bauteilen**

(71) Anmelder: TMS Automotion GmbH, 4031 Linz (AT)
(72) Erfinder: Gartner, Markus, 4072 Alkoven (AT); Wieser, Klaus, 4020 Linz (AT)
(74) Vertreter: VA TECH Patente GmbH & Co

(57) **Zusammenfassung**

Insbesondere zum Transport langer Bauteile 5 entlang einer Transportstrecke 11, reicht ein einziges Transportfahrzeug oftmals nicht aus, sondern es müssen mehrere Transportfahrzeuge 2, 3 als Transporteinrichtung 1 verwendet werden, die zum Transport des Bauteils 5 gleichzeitig bewegt werden müssen. Die vorliegende Erfindung offenbart nun eine solche Transporteinrichtung 1, bei der die Transportfahrzeuge 2, 3 durch den Bauteil 5 selbst miteinander gekoppelt werden.

## Beschreibung

Die vorliegende Erfindung betrifft eine Transporteinrichtung zum Transport von Bauteilen bestehend aus zumindest zwei gekoppelten Transportfahrzeugen, die zum Transport gemeinsam bewegt werden, sowie ein zugehöriges Verfahren und eine Fertigungsstraße mit einer erfindungsgemäßen Transporteinrichtung.

Fertigungsstraßen mit einer Vielzahl an Arbeitsstationen zwischen denen Bauteile auf Transporteinrichtungen transportiert werden sind hinlänglich und in unterschiedlichen Ausgestaltungen bekannt. Ebenso wie fahrerlose Transportfahrzeuge (FTF) zum Transportieren von Bauteilen entlang vorgegebener Transportstrecken.
Ebenso ist es bekannt, mehrere Transportfahrzeuge mit speziellen Kopplungseinrichtungen zusammenzukoppeln und entlang bestimmter Streckenabschnitte gemeinsam zu bewegen, wie z.B. in der EP 718 179 A1 gezeigt.

Für den Transport von insbesondere langen oder großen Bauteilen, wie z.B. ein Grundrahmen eines LKW-Fahrgestells, reicht aber in den meisten Fällen ein einziges Transportfahrzeug zum Transportieren eines solchen Bauteils nicht aus, sondern es werden zumindest zwei Transportfahrzeuge, je eines an beiden Enden des Bauteils, benötigt, um den Bauteil sicher transportieren zu können. Dazu müssen die Transportfahrzeuge natürlich gleichzeitig und gleichmäßig bewegt werden.

Der Erfindung liegt somit die Aufgabe zugrunde, eine einfach aufgebaute Transporteinrichtung anzugeben, die Bauteile mit mehreren Transportfahrzeugen sicher, einfach und kostengünstig bewegen kann.

Diese Aufgabe wird durch die erfindungsgemäße Transporteinrichtung dadurch gelöst, dass zumindest eines der Transportfahrzeuge selbstfahrend und selbstlenkend ausgeführt ist und die Transportfahrzeuge durch zumindest einen zu transportierenden Bauteil miteinander gekoppelt sind. Für das Transpörtverfahren wird die Aufgabe gelöst, indem zumindest zwei Transportfahrzeuge mit zumindest einem zu transportierenden Bauteil miteinander gekoppelt werden und die durch den Bauteil gekoppelten Transportfahrzeuge gemeinsam bewegt werden, wobei zumindest eines davon selbstfahrend und selbstlenkend bewegt wird.
Die Transportfahrzeuge benötigen somit keine eigenen Kopplungseinrichtungen zum Verbinden der Transportfahrzeuge, sondern die Kopplung erfolgt durch den zu transportierenden Bauteil selbst, womit die Transportfahrzeuge besonders einfach ausgeführt und die Bauteile sicher transportiert werden können. Durch die Kopplung durch den Bauteil wird weiters sichergestellt, dass sich beide Transportfahrzeuge gleichzeitig und gleichmäßig bewegen.

Dadurch, dass nur ein Transportfahrzeug selbstfahrend und selbstlenkend, also als FTF, ausgeführt sein muss, können die Kosten einer erfindungsgemäßen Transporteinrichtung erheblich reduziert werden. Dies ermöglicht weiters, dass die Transportfahrzeuge bzw. die Transporteinrichtung sehr flexibel und unabhängige voneinander bewegt werden können.

Weitere besondere Vorteile der Erfindung ergeben sich aus den abhängigen Ansprüchen.

Wenn zumindest ein weiteres Transportfahrzeuge der Transporteinrichtung selbstlenkend ausgeführt ist, kann die Transporteinrichtung die vorgegebene Spur besser halten. Außerdem wird die Transporteinrichtung leichter manövrierbar.

Die Kopplung mit dem Bauteil kann besonders einfach durchgeführt werden, wenn an zumindest einem Transportfahrzeug eine Haltevorrichtung vorgesehen ist, mit der der Bauteil gehalten wird. Da zum sicheren Transportieren der Bauteile die Bauteile ohnehin vorteilhafterweise gehalten werden, vereinfacht sich damit die Transporteinrichtung noch weiter.

Um die Transportfahrzeuge auch dann gekoppelt bewegen zu können, wenn der Bauteil entkoppelt ist, wird vorteilhaft an zumindest einem Transportfahrzeug eine zusätzliche Kopplungseinrichtung vorgesehen. Damit müssen nicht alle Transportfahrzeuge mit einem Antrieb ausgestattet werden, da die Fahrzeuge auch leer direkt miteinander gekoppelt und bewegt werden können, was die Kosten einer erfindungsgemäßen Transporteinrichtung erheblich verringert. Diese zusätzliche Kopplungseinrichtung wird günstigerweise nur eingesetzt, wenn keine Bauteile transportiert werden, die Transportfahrzeuge also nicht durch den Bauteil gekoppelt sind.

Die erfindungsgemäße Transporteinrichtung wird sehr vorteilhaft in einer Fertigungsstraße mit einer Transportstrecke, entlang der Bauteile mit zumindest einer Transporteinrichtung transportiert werden und zumindest einer Arbeitsstation zum Bearbeiten der Bauteile eingesetzt, wobei der Bauteil, der die Transportfahrzeuge miteinander koppelt in zumindest einer Arbeitsstation bearbeitbar ist. Der Bauteil stellt also die sichere Bewegung der Transporteinrichtung sicher, indem er die Transportfahrzeuge koppelt, und kann in den Arbeitsstationen gleichzeitig bearbeitet werden. Damit kann die Fertigungsstrecke sehr einfach und flexibel aufgebaut werden.
Dabei kann der Bauteil je nach Anwendungsfall alternativ während der Bearbeitung in der Arbeitsstation mit der Transporteinrichtung verbunden, oder auch von der Transporteinrichtung entkoppelt sein.

Der fertig bearbeitete Bauteil wird vorteilhaft am Ende der Transportstrecke von der Transporteinrichtung entkoppelt und von der Fertigungsstraße weggebracht. Dazu erweist es sich als günstig, wenn die Transportfahrzeuge nach dem Entkoppeln des Bauteils mit der Kopplungseinrichtung direkt miteinander koppelbar sind. Damit wird sichergestellt, dass auch ein nicht angetriebenes Transportfahrzeug ohne zusätzliche Einrichtungen oder manuellem Eingriff aus der Transportstrecke entfernt werden kann.

Um die Anzahl der Transportfahrzeuge und damit die Kosten der Fertigungsstraße möglichst niedrig zu halten wird eine Rückführstrecke vorgesehen, entlang der die Transportfahrzeuge vom Ende der Transportstrecke zum Beginn der Transportstrecke bewegbar sind. Die Transportfahrzeuge werden somit zyklisch eingesetzt.

Die vorliegende Erfindung wird anhand der schematischen, beispielhaften und nicht einschränkenden Figuren 1 bis 3 beschrieben. Dabei zeigt
- Fig. 1: eine erfindungsgemäße Transporteinrichtung,
- Fig. 2: zwei ohne Bauteile gekoppelte Transportfahrzeuge und
- Fig. 3: eine Darstellung einer Transportstrecke.

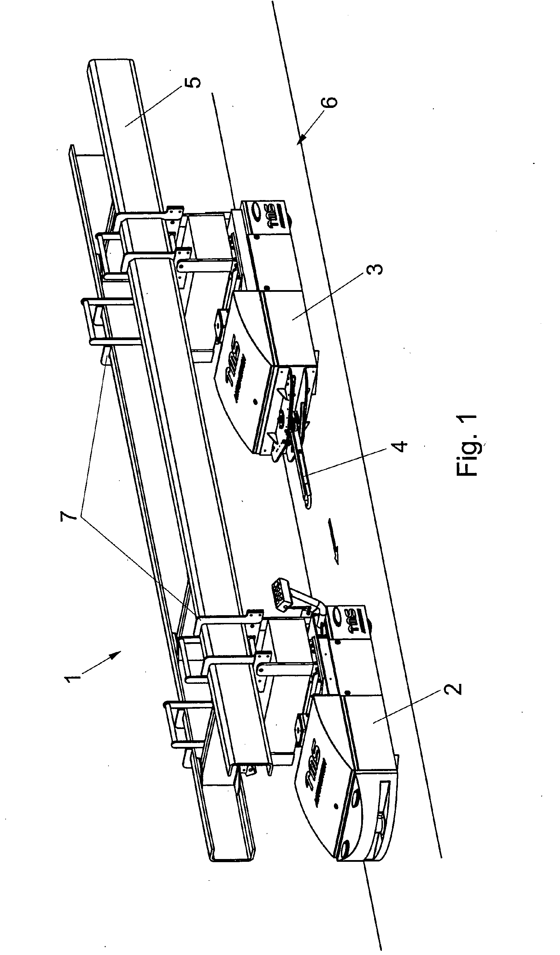

Die erfindungsgemäße Transporteinrichtung 1 nach Fig. 1 umfasst zwei Transportfahrzeuge 2 und 3, die hier ausschließlich durch einen zu transportierenden Bauteil 5 miteinander verbunden und gekoppelt sind, d.h., dass die Transportfahrzeuge 2, 3 nur mehr gemeinsam bewegt werden können. Zur Kopplung weisen die Transportfahrzeuge 2, 3 jeweils Haltevorrichtungen 7 auf, die den Bauteil 5 halten und fixieren. Die beiden Transportfahrzeuge 2, 3 sind somit direkt durch den zu transportierenden Bauteil 5 und nicht durch eventuell zusätzlich vorhandenen Einrichtungen, wie Bauteilhaltevorrichtungen, Spannrahmen, etc., die einen Bauteil tragen, gekoppelt. Die Koppelung könnte aber ebenso ohne Haltevorrichtung, über das Eigengewicht des Bauteils 5 und den entstehenden Reibungskräften erfolgen. Zusätzlich könnten auch nicht dargestellte Positioniereinrichtungen vorgesehen werden, um den Bauteil 5 in einer genau definierten Lage auf den Transportfahrzeugen 2, 3 zu fixieren, um eine exakte Ausrichtung und/oder Bearbeitung des Bauteils 5 zu gewährleisten. Um die Kurvengängigkeit der Transporteinrichtung 1 sicherzustellen könnte der Bauteil 5 auch um eine im Wesentlichen vertikale Achse schwenkbar auf den Transportfahrzeugen 2, 3 gelagert sein.
Zumindest eines der Transportfahrzeuge 2, 3 ist als hinlänglich bekanntes fahrerloses Transportfahrzeug (FTF) ausgebildet, d.h. es ist selbstfahrend und selbstlenkend. Das bedeutet im Wesentlichen, dass sich das FTF ohne externe Zwangsführung, wie z.B. eine Nut im Boden in die ein Zapfen einragt, selbstständig bewegen kann. Zur Steuerung können entweder Steuersignale an eine Steuereinheit des FTF übertragen werden, wie z.B. über einen bekannten im Boden eingelassenen Steuerdraht, oder das FTF kann auch eine Steuereinheit mit einem Steuerprogramm mit einer entsprechenden Wegvorgabe beinhalten. Das FTF kann auch mit entsprechenden Sensoren ausgestattet sein, um Abweichungen vom vorgegebenen Weg erkennen zu können. Das zweite Transportfahrzeug der Transporteinrichtung 1 ist vorteilhaft nur selbstlenkend ausgeführt, d.h. es ist in der Lage selbsttätig Richtungsänderungen durchzuführen, um die Transporteinrichtung 1 leichter auf Kurs halten zu können. Es könnte aber gegebenenfalls auch als FTF oder als vollkommen passives Fahrzeug, also eher ein "Anhänger", ohne Lenkung und Antrieb, ausgeführt sein. Im Falle, dass es als weiteres FTF ausgeführt ist, sollten die Antriebe der beiden FTF synchronisiert werden, oder ein Antrieb sollte deaktiviert werden.

Die Lenkeinrichtung könnte eine hinlänglich bekannte Lenkung sein, die auf die Räder oder eine Achse des FTF wirkt. Ebenso könnte die Lenkeinrichtung bekannter Weise auch durch den Antrieb gebildet werden, indem die Räder unterschiedlich angetrieben werden.

Im Beispiel nach Fig. 1 besteht der Bauteil 5 aus zwei parallelen Trägern, die durch drei kurze, quer liegende Träger miteinander verbunden sind. Ein solcher Bauteil 5 kommt typischerweise als Grundrahmen eines LKW-Fahrgestells vor. Es wäre aber genauso möglich die beiden Transportfahrzeuge 2, 3 durch separate Bauteile, z.B. zwei einzelnen Träger, miteinander zu koppeln.

Im Beispiel nach Fig. 1 ist das in Fahrtrichtung (angedeutet durch den Pfeil) gesehen vordere Transportfahrzeug 2 als FTF selbstfahrend und selbstlenkend ausgeführt, es weist also einen eigenen Antrieb auf. Weiters kann dieses Transportfahrzeug 2 auch eine entsprechende Steuereinrichtung aufweisen, um das Transportfahrzeug 2 eigenständig entlang der Transportstrecke steuern zu können. Es könnte aber auch eine Steuerleitung vorgesehen sein, z.B. eine Schleifleitung am Boden, über die das Transportfahrzeug 2 mit Steuerbefehlen versorgt wird.
Das hintere Transportfahrzeug 3 ist hier ohne Antrieb ausgeführt und wird daher vom selbstfahrenden Transportfahrzeug 2 geschleppt, d.h. der Antrieb des vorderen Transportfahrzeuges 2 muss so ausgelegt sein, dass er beide Transportfahrzeuge 2, 3 und den Bauteil 5 mit den entsprechenden Geschwindigkeiten bewegen kann.
Es ist jedoch selbstverständlich, dass auch nur das hintere Transportfahrzeug 3 angetrieben wird und das vordere Transportfahrzeug 2 geschoben wird, oder dass beide Transportfahrzeuge 2, 3 angetrieben werden, wobei dann die beiden Antriebe synchronisiert sein sollten.

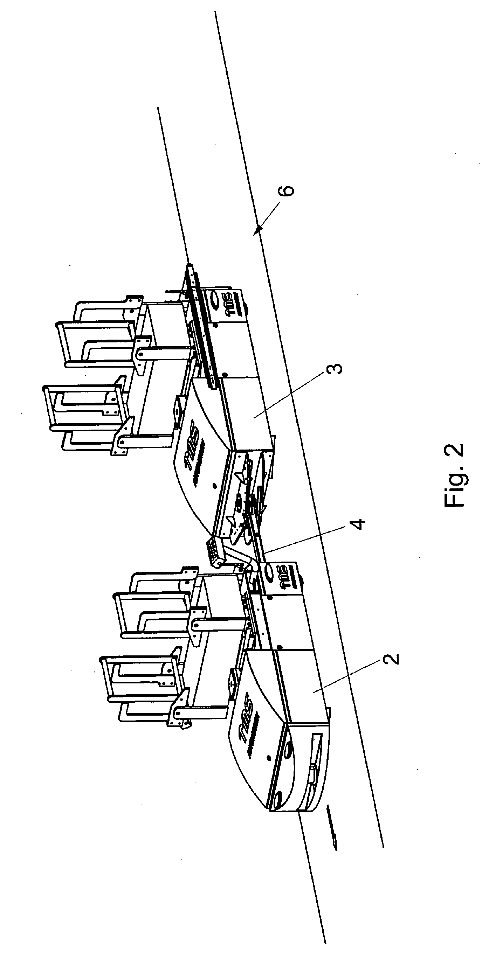

Im Beispiel nach Fig. 1 weist das hintere Transportfahrzeug 3 eine zusätzliche Kopplungseinrichtung 4, z.B. eine Deichsel, auf, mit der die beiden Transportfahrzeuge 2, 3 gekoppelt werden können, wenn kein Bauteil 5 vorhanden ist. Damit kann ein nicht angetriebenes Transportfahrzeug 3 auch dann bewegt werden, wenn die beiden Transportfahrzeuge 2,3 nicht durch einen Bauteil 5 gekoppelt sind. Dies ist z.B. der Fall, wenn der Bauteil 5 nach der Bearbeitung entfernt wird und die Transportfahrzeuge 2, 3 zum Anfang einer Transportstrecke 6 rückgeführt werden. Fig. 2 zeigt zwei auf diese Weise gekoppelte Transportfahrzeuge 2, 3, die gemeinsam ohne Bauteil 5 bewegt werden. Solche zusätzlichen Kopplungseinrichtungen 4 können natürlich an beliebiger Stelle und auch auf jedem beliebigen Transportfahrzeug 2, 3 angeordnet sein.

Ein Transportfahrzeug 2, 3 könnte auch mit einem Auffahrschutz und/oder Kollisionsschutz ausgeführt sein, der auch dem Personenschutz dienen könnte. Solche Schutzsysteme, z.B. elektronische oder optische Abtastsensoren, sind hinlänglich bekannt, weshalb hier nicht weiter darauf eingegangen wird.

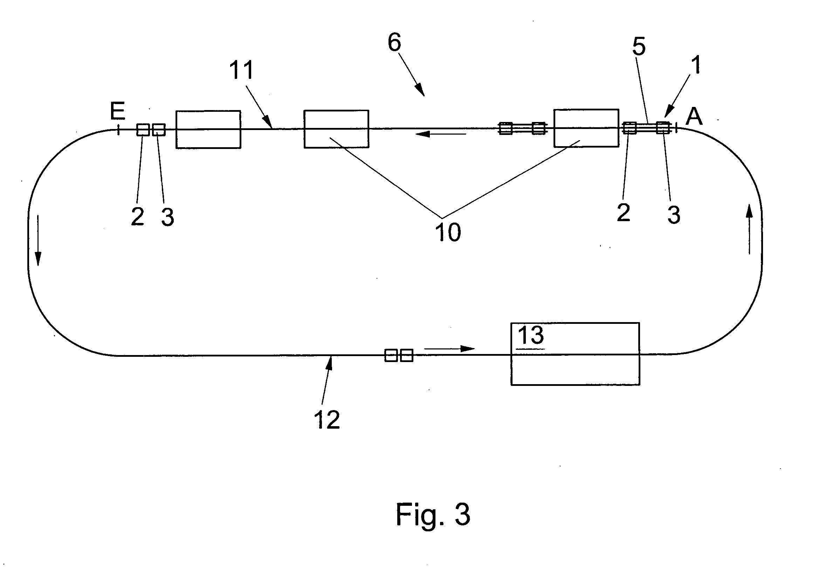

In Fig. 3 ist schematisch eine Fertigungsstraße 6, wie z.B. eine Montagelinie, gezeigt, die eine Transportstrecke 11 und eine Rückführungsstrecke 12 aufweist. Die Bauteile 5 werden entlang der Transportstrecke 11 bewegt, entlang der mehrere Arbeitsstationen 10 angeordnet sind, in denen ein Bauteil 5 auf einer Transporteinrichtung 1 bearbeitet wird. Die Arbeitsstation 10 könnte z.B. als Schweißstation ausgeführt sein, in der weitere Bauteile am Bauteil 5 der Transporteinrichtung 1 befestigt werden können. Auf diese Weise kann z.B. ein LKW-Fahrgestell Schritt für Schritt montiert werden, indem die Transporteinrichtung 1 mehrere hintereinanderfolgende Arbeitsstationen 10 durchläuft.

Am Anfang A der Transportstrecke 11 der Fertigungsstraße 6, z.B. eine LKW-Montagelinie, werden zwei Transportfahrzeuge 2, 3 in Position gebracht, der Bauteil 5, z.B. die beiden Längsträger des LKW-Fahrgestells (Länge bis 11 m), aufgelegt und mit Haltevorrichtungen 7 an der Transporteinrichtung 1 festgehalten. Damit wird der Bauteil 5 nicht nur für die weitere Bearbeitung bzw. Montage in Position gehalten, sondern es wird auch ein Transportfahrzeug 3, welches keinen Fahrantrieb besitzt, vom in Fahrtrichtung gesehen vorderen Transportfahrzeug 2 gezogen. Das nicht angetriebene Transportfahrzeug 3 kann auch eine eigene Lenkeinrichtung aufweisen, um sicherer auf der Spur zu bleiben. Diese Transporteinrichtung 1, bestehend aus den beiden durch den Bauteil 5 gekoppelten Transportfahrzeugen 2, 3, durchfährt nun innerhalb der Transportstrecke 11, z.B. eine Montagelinie, die einzelnen Arbeitsstationen 10. Die Bewegung ist beispielsweise eine "stop and go" Bewegung, d.h. dass die Transporteinrichtung 1 in den Arbeitsstationen 10 angehalten wird und zwischen den Arbeitsstationen 10 bewegt wird. Die Fahrfreigabe kann entweder manuell durch Bedienpersonal erfolgen, oder ebenso automatisch gesteuert, z.B. durch eine zentrale Steuerung der Fertigungsstraße 6.
Am Ende E der Transportstrecke 11, wird der fertig bearbeitete Bauteil 5, z.B. der montierte LKW-Rahmen, mit einer nicht dargestellten Einrichtung entnommen und z.B. einer weiteren Bearbeitung zugeführt.
Das nicht angetriebene Transportfahrzeug 3 kann nun manuell durch Bedienpersonal zum selbstfahrenden Transportfahrzeug 2 geschoben werden und dort mit Hilfe einer Kopplungseinrichtung 4, z.B. eine Deichsel, angekoppelt werden. Es könnte aber auch eine automatische Vorrichtung vorgesehen werden, die das Zusammenführen der einzelnen Transportfahrzeuge 2, 3 übernimmt. Im Falle, dass beide Transportfahrzeuge 2, 3 selbstfahrend ausgeführt sind, kann das hintere Transportfahrzeug 3 natürlich auch selbsttätig auf das vordere Transportfahrzeug 2 auffahren und sich gegebenenfalls auch selbsttätig ankoppeln. Wenn nur das hintere Transportfahrzeug 3 angetrieben ist, erspart man sich natürlich zusätzliche Einrichtungen zum Zusammenführen der Transportfahrzeuge 2, 3 und die beiden Transportfahrzeuge 2, 3 könnten auch ohne Kopplung gemeinsam bewegt werden, indem das hintere Transportfahrzeug 3 das vordere Transportfahrzeug vor sich herschiebt.
Dieses Transportfahrzeug-Gespann (z.B. Fig. 2) fährt nun selbsttätig entlang einer Rückführungsstrecke 12 zurück zum Anfang A der Transportstrecke 11, wo das hintere Transportfahrzeug 3 nach Erreichen der Ausgangsposition abgekuppelt wird und das vordere Transportfahrzeug 2 ebenfalls in seine Ausgangsposition fährt. Es wird nun mittels einer nicht dargestellten Einrichtung ein neuer Bauteil 5 aufgelegt und der Zyklus wiederholt sich. Die Transportfahrzeuge 2, 3 könnten aber natürlich auch einzeln rückgeführt werden.

Entlang der gesamten Fertigungsstraße 6 können in Abhängigkeit zur Fertigungskapazität mehrere derartige Transporteinrichtungen 1 unterwegs sein, wobei die zu transportierenden Bauteile selbstverständlich unterschiedlich lang sein könnten, d.h. der Abstand zwischen den Transportfahrzeugen 2, 3 könnte unterschiedlich sein, und auch gänzlich unterschiedliche Bauteile transportiert werden könnten.

In den Arbeitsstationen 10 kann der Bauteil 5 zur Bearbeitung von der Transporteinrichtung 1 abgekoppelt werden, oder auch im gekoppelten Zustand bearbeitet werden. Vorteilhafterweise wird der Bauteil während dem gesamten Transport entlang der Transportstrecke 11 nicht von der Transporteinrichtung 1 entfernt und erst am Ende E der Transportstrecke 11 entnommen.

Die Rückführungsstrecke 12 und/oder die Transportstrecke 11 könnte auch einen Transportfahrzeugpuffer 13 umfassen, um unterschiedliche Fertigungsgeschwindigkeiten der Fertigungsstraße 6 ausgleichen zu können.

## Patentansprüche

1. Transporteinrichtung zum Transport von Bauteilen (5) bestehend aus zumindest zwei gekoppelten Transportfahrzeugen (2, 3), die zum Transport gemeinsam bewegt werden, **dadurch gekennzeichnet, dass** zumindest eines der Transportfahrzeuge (2, 3) selbstfahrend und selbstlenkend ausgeführt ist und dass die Transportfahrzeuge (2, 3) zur gemeinsamen Bewegung durch zumindest einen zu transportierenden Bauteil (5) miteinander gekoppelt sind.

2. Transporteinrichtung nach Anspruch 1, **dadurch gekennzeichnet, dass** zumindest ein weiteres Transportfahrzeug (2, 3) selbstlenkend ausgeführt ist.

3. Transporteinrichtung nach Anspruch 1, **dadurch gekennzeichnet, dass** an zumindest einem Transportfahrzeug (2, 3) eine Haltevorrichtung (7) vorgesehen ist, mit der der Bauteil (5) gehalten wird.

4. Transporteinrichtung nach einem der Ansprüche 1 bis 3, **dadurch gekennzeichnet, dass** an zumindest einem Transportfahrzeug (2, 3) eine Steuereinheit zum Steuern des Transportfahrzeuges (2, 3) vorgesehen ist.

5. Transporteinrichtung nach einem der Ansprüche 1 bis 4, **dadurch gekennzeichnet, dass** an zumindest einem Transportfahrzeug (2, 3) eine Lenkeinrichtung angeordnet ist.

6. Transporteinrichtung nach einem der Ansprüche 1 bis 5, **dadurch gekennzeichnet, dass** an zumindest einem Transportfahrzeug (2, 3) eine zusätzliche Kopplungseinrichtung (4) zum direkten Koppeln von zumindest zwei Transportfahrzeugen (2, 3) vorgesehen ist.

7. Transporteinrichtung nach Anspruch 6, **dadurch gekennzeichnet, dass** die zusätzliche Kopplungseinrichtung (4), während der Kopplung der Transportfahrzeuge (2, 3) durch einen Bauteil (5), entkoppelt ist.

8. Fertigungsstraße mit einer Transportstrecke, entlang der Bauteile mit zumindest einer Transporteinrichtung (1) nach einem der Ansprüche 1 bis 6 transportiert werden und zumindest einer Arbeitsstation (10) zum Bearbeiten der Bauteile (5), **dadurch gekennzeichnet, dass** ein Bauteil (5), der die Transportfahrzeuge (2, 3) miteinander koppelt, in zumindest einer Arbeitsstation (10) bearbeitbar ist.

9. Fertigungsstraße nach Anspruch 8, **dadurch gekennzeichnet, dass** der Bauteil (5) während der Bearbeitung in der Arbeitsstation (10) mit der Transporteinrichtung (1) verbunden ist.

10. Fertigungsstraße nach Anspruch 8, **dadurch gekennzeichnet, dass** der Bauteil (5) während der Bearbeitung in der Arbeitsstation (10) von der Transporteinrichtung (1) entkoppelt ist.

11. Fertigungsstraße nach einem der Ansprüche 8 bis 10, **dadurch gekennzeichnet, dass** der bearbeitete Bauteil (5), vorzugsweise am Ende (E) der Transportstrecke (11), von der Transporteinrichtung (1) entkoppelbar ist.

12. Fertigungsstraße nach Anspruch 11, **dadurch gekennzeichnet, dass** die Transportfahrzeuge (2, 3) nach dem Entkoppeln des Bauteils (5) mit der zusätzlichen Kopplungseinrichtung (4) direkt miteinander koppelbar sind.

13. Fertigungsstraße nach einem der Ansprüche 8 bis 12, **dadurch gekennzeichnet, dass** eine Rückführstrecke (12) vorgesehen ist, entlang der die Transportfahrzeuge (2, 3) vom Ende (E) der Transportstrecke (11) zum Beginn (A) der Transportstrecke (11) bewegbar sind.

14. Verfahren zum Transportieren von Bauteilen (5) entlang einer Transportstrecke (11), **dadurch gekennzeichnet, dass** zumindest zwei Transportfahrzeuge (2, 3) mit zumindest einem zu transportierenden Bauteil (5) miteinander gekoppelt werden und die durch den Bauteil (5) gekoppelten Transportfahrzeuge (2, 3) gemeinsam bewegt werden, wobei zumindest ein Transportfahrzeug (2, 3) selbstfahrend und selbstlenkend bewegt wird.

15. Verfahren nach Anspruch 14, **dadurch gekennzeichnet, dass** zumindest ein weiteres Transportfahrzeug (2, 3) selbstlenkend bewegt wird.

16. Verfahren nach Anspruch 14 oder 15, **dadurch gekennzeichnet, dass** die Transportfahrzeuge (2, 3) entlang einer Fertigungsstraße (6) zwischen Arbeitsstationen (10), die entlang einer Transportstrecke (11) der Fertigungsstraße (6) angeordnet sind, bewegt werden.

17. Verfahren nach Anspruch 16, **dadurch gekennzeichnet, dass** der Bauteil (5) in zumindest einer Arbeitsstation (10) bearbeitet wird.

18. Verfahren nach Anspruch 17, **dadurch gekennzeichnet, dass** der Bauteil (5) zum Bearbeiten vom Transportfahrzeug (2, 3) entkoppelt wird.

19. Verfahren nach einem der Ansprüche 14 bis 18, **dadurch gekennzeichnet, dass** am Ende (E) der Transportstrecke (11) der bearbeitete Bauteil (5) vom Transportfahrzeug (2, 3) entkoppelt wird.

20. Verfahren nach einem der Ansprüche 14 bis 19, **dadurch gekennzeichnet, dass** die Transportfahrzeuge (2, 3) von der Transportstrecke (11), vorzugsweise vom Ende (E) der Transportstrecke (11), zum Anfang (A) der Transportstrecke (11) rückgeführt werden.

21. Verfahren nach Anspruch 20, **dadurch gekennzeichnet, dass** Transportfahrzeuge (2, 3), die durch einen Bauteil (5) miteinander gekoppelt waren, direkt miteinander gekoppelt werden und gemeinsam rückgeführt werden.

22. Verfahren nach Anspruch 20 oder 21, **dadurch gekennzeichnet, dass** rückgeführte Transportfahrzeuge (2, 3) am Anfang (A) der Transportstrecke (11) wieder mit einem Bauteil (5) miteinander gekoppelt werden.
